(19) Europäisches Patentamt
European Patent Office
Office européen des brevets

(11) Publication number: **0 080 349 B1**

(12) **EUROPEAN PATENT SPECIFICATION**

(45) Date of publication of patent specification: **25.09.85**

(21) Application number: **82306184.1**

(22) Date of filing: **19.11.82**

(51) Int. Cl.$^4$: **C 07 F 5/00,** C 07 F 3/08, C 07 F 9/50, H 01 L 21/20 // C25B3/12

(54) **Organometallic adducts.**

(30) Priority: **25.11.81 GB 8135593**
**25.11.81 GB 8135594**

(43) Date of publication of application:
**01.06.83 Bulletin 83/22**

(45) Publication of the grant of the patent:
**25.09.85 Bulletin 85/39**

(84) Designated Contracting States:
**DE FR GB NL**

(56) References cited:
**DE-A-2 844 712**
**DE-B-2 810 605**
**US-A-3 328 272**

(73) Proprietor: **The Secretary of State for Defence in Her Britannic Majesty's Government of The United Kingdom of Great Britain and Northern Ireland Whitehall**
**London SW1A 2HB (GB)**

(72) Inventor: **Mullin, John Brian**
**The Hoo Brockhill Road**
**West Malvern Worcestershire WR14 4DL (GB)**
Inventor: **Holliday, Arthur Kenneth**
**"Cotswold" 36 Plymyard Avenue**
**Bromborough Wirral L62 6BN (GB)**
Inventor: **Cole-Hamilton, David John**
**30 Moss Lane Bickerstaffe**
**Ormskirk Lancashire (GB)**
Inventor: **Jones, Anthony Copeland**
**108 Lingmell Avenue Clinkham Wood**
**St. Helens Merseyside WA11 7AX (GB)**

(74) Representative: **McCormack, Derek James et al**
**Procurement Executive Ministry of Defence Pats 1A(4), Room 2014 Empress State Building Lillie Road**
**London SW6 1TR (GB)**

**EP 0 080 349 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to organometallic adducts which are useful in the preparation of compound semiconductor materials.

Compound semiconductor materials, e.g. materials such as gallium arsenide, indium phosphide, gallium phosphide and cadmium mercury telluride are well known materials having uses in the electronics industry in such applications as microwave oscillators, semiconductor light emitting diodes and lasers, and infrared detectors.

Such materials have been made in the past by forming, usually on a substrate crystal, one or more active layers, by the method of vapour phase epitaxy (VPE).

It has been known for some time to produce by VPE compound semiconductors of the form $M^AQ^A$ where $M^A$ is Group III element and $Q^A$ is Group V element by reacting a trialkyl of the element $M^A$ with a gaseous compound, e.g. a hydride, of the Group V element $Q^A$. This method is a suitable method of preparing gallium arsenide from $Ga(CH_3)_3$ and $As\ H_3$ for example. However in the case where $M^A$ is In and $Q^A$ is P unwanted involatile polymers are formed in the reaction of $In(CH_3)_3$ and $PH_3$.

More recently, an approach has been used in the preparation of III—V compounds which in the case of indium phosphide avoids the formation of unwanted polymers. Adducts of trialkyl compounds of both $M^A$ and $Q^A$, i.e. adducts of the form $M^A(R^A)_x . Q^A(R^B)_x$, where $R^A$ and $R^B$ are metal alkyls (where x=3), have been formed, e.g. $(CH_3)_3In . P(C_2H_5)_3$ and $(CH_3)_3In . N(C_2H_5)_3$. These adducts provide a favourable route to the required semiconductor materials because (i) they are very stable in an inert, water-free atmosphere; (ii) they may be easily purified by sublimation or zone refining; and (iii) they may be decomposed pyrolytically at normal pressure either alone or in the presence of a group V hydride to give the required semiconductor material.

The adducts have in certain cases additionally contained a halogen e.g. Cl.

The methods of preparation of these adducts which have been used hitherto have involved direct reaction of the appropriate trialkyl of the Group III element with a compound containing the trialkyl of the Group V element. These methods have the disadvantages that trialkyls of Group III elements can themselves be expensive and difficult to prepare, and dangerous to handle, particularly in the case of the trimethyls and triethyls of indium and gallium.

In addition, if such methods are extended to the preparation of II—VI semiconductor compounds and involve the use of a compound containing a halogen species, contamination of the final product by the halogen species is likely to be a problem.

It is the purpose of the present invention in one respect to provide a method for the preparation of adducts suitable for conversion, e.g. by pyrolytic decomposition, into compound semiconductors, which method may be carried out by avoiding use of metal alkyl compounds and halogen containing species.

According to the present invention in a first aspect there is provided a method of preparing an adduct suitable for conversion into a compound semiconductor of formula $M^1(R^1)_x . [Q(R^2)_y]_z$ where $M^1$ is an element selected from indium, gallium, aluminium and cadmium, Q is an element selected from nitrogen, phosphorus, arsenic and antimony when $M^1$ is indium, gallium or aluminium and from oxygen, sulphur, selenium and tellurium where $M^1$ is cadmium, $(R^1)_x$ and $(R^2)_y$ each independently represent the same or different alkyl or aryl radicals and x represents an integer equal to the valency of $M^1$, y represents an integer equal to the valency of Q and z represents an integer equal to 1 or 2, the method comprising reacting a precursor adduct of the form $M^1(R^1)_x . L$ with a compound of the formula $Q(R^2)_y$, wherein L is a solvent which is an aliphatic ether having from 3 to 12 carbon atoms.

If x=3 then y=3 and z=1. If x=2 then z=1 or 2 and y=2.

Preferably, in the reaction of the precursor adduct $M^1(R^1)_x . L$ with the compound $Q(R^2)_y$, the compound $Q(R^2)_y$ is in excess.

The precursor adduct is preferably prepared electrolytically using a sacrificial anode of the metal $M^1$ and an electrolyte containing the radicals $R^1$ and L. Use of the compounds $M^1(R^1)_x$ is avoided in the electrolysis.

Generally, the precursor adduct is less stable in air, more volatile, than the final adduct.

$R^1$ and $R^2$ are preferably alkyl groups having from 1 to 7 carbon atoms, particularly methyl or ethyl. Preferably the groups $R^1$ in $(R^1)_x$ are identical groups and the groups $R^2$ in $(R^2)_y$ are identical groups. Preferably, although not necessarily, the groups $R^1$ are the same as the groups $R^2$.

The radical L is preferably a cycloaliphatic mono- or poly-ether having from 3 to 8 carbon atoms, e.g. tetrahydrofuran or dioxan. It may also be a non-cyclic ether, e.g. di(n-propyl) ether.

In the method according to first aspect of the present invention adducts of the form $M^1(R^1)_x . L^1$, particularly where $L^1$ is tetrahydrofuran, can readily be converted into the required adducts $M^1(R^1)_x . [Q(R^2)_y]_z$. Furthermore, the method of preparation according to the first aspect present invention allows use of the compounds $M^1(R^1)_x$ and halogens to be avoided. The method according to the present invention can thus be as efficient as, and cheaper and safer than, the known methods for the preparation of the adducts $M^1(R^1)_x . [Q(R^2)_y]_z$.

The adducts $M^1(R^1)_x . L$ when formed electrolytically may be purified before conversion into the adducts $M^1(R^1)_z . [Q(R^2)_y]_z$. Alternatively the conversion may be carried out using the final reaction mixture of the electrolytic preparation process of $M^1(R^1)_x . L$. In the latter case, after the compound $Q(R^2)_y$ has been

added to the final reaction mixture of the electrolytic preparation, the adduct $M^1(R^1)_x \, . \, [Q(R^2)_y]_z$ produced may be purified by pumping off the solvent L, and by sublimation and zone refining.

According to the present invention in a second aspect there is provided an adduct useful in the method of the first aspect which adduct has the formula $M^3(R^1)_3 \, . \, L$ wherein $M^1$ is selected from indium and gallium, $(R^3)_3$ represents a trialkyl group and L represents tetrahydrofuran. Preferably, the tri-alkyl group contains 3 identical alkyl groups having from 1 to 7 carbon atoms.

The final adducts $M^1(R^1)_x \, . \, [Q(R^2)_y]_z$ when formed may be decomposed in a known way to form the corresponding compound semiconductors $M^1Q$. Mixed or alloy semiconductor materials may be formed by simultaneously decomposing mixtures of such adducts. Alternatively the final adducts may be converted into the compound semiconductors by decomposition in the presence of the hydride of the appropriate Group V element.

Embodiments of the present invention will now be described by way of example.

In the following Examples all electrochemical preparations were carried out in an atmosphere of dry oxygen free nitrogen using a three-necked flask fitted with a water condenser, platinum cathode and an indium or gallium anode (as appropriate). The power supply was a Solartron Vari-Pack, Model SRS 153 (Trade Mark).

All chemicals and solvents were dried and purified before use by standard methods.

Example 1

Preliminary preparation of dimethylmagnesium.

Dimethylmagnesium for use in the following Examples was prepared in a known way by the precipitation of a dioxanmagnesium halide complex from a Grignard solution as follows:

MeMgI was prepared by the slow addition of methyl iodide (30 ml, 0.48 moles) to a stirred suspension of magnesium turnings (12.6 g, 0.53 moles) in diethyl ether (500 ml). Addition of dioxan (55 ml, 0.64 moles) precipitated magnesium iodide. The clear supernatant was filtered and the diethyl ether removed in vacuo to leave the white solid dimethylmagnesium from which residual dioxan was removed by heating in vacuo at 130°C—140°C for 18 hours.

Example 2

Electrolytic preparation of a trimethylgalliumtetrahydrofuran (thf) adduct

A mixture of dimethylmagnesium (0.9 g, 17 mmole) and tetraethylammonium perchlorate (1.0 g, 4 mmole) in thf (100 ml) was electrolysed using a Pt cathode (1×1 cm plate) and a sacrificial gallium pool anode. The mixture was heated to 70°C and was stirred continuously throughout the electrolysis. A current of 40 mA was obtained at 100 V. The reaction was allowed to proceed for 56 hours during which time the mixture darkened considerably. After cooling, the mixture was allowed to settle and was then filtered. After removal of the thf in vacuo the pure liquid product was obtained by condensing it into a trap at −196°C, whilst the distillation vessel was heated to 60°C.

The product was investigated using:

(i) mass spectra measured as in Example 4 below;

(ii) $^1H$ nuclear magnetic resonance (nmr) spectra recorded as in Example 4 below.

The results obtained are as listed in the Tables below.

Example 3

Electrolytic preparation of a trimethylindiumtetrahydrofuran adduct

A mixture of dimethylmagnesium (0.5 g, 10 mmole) and tetraethylammonium perchlorate (1.0 g, 4 mmole) in thf (100 ml) was electrolysed using a Pt cathode and a sacrificial indium wire anode at room temperature (20°C). A voltage of 100 V was applied and gave a current of 50 mA. The reaction was allowed to proceed for 72 hours during which time magnesium was deposited at the cathode and 1.5 g (10 mmole) of indium was consumed. The mixture was filtered and the thf was removed in vacuo. The pure liquid product was obtained by condensing it into a −196°C trap in vacuo, whilst the distillation vessel was heated to 60°C.

The product was investigated as in Example 2 and the results obtained are as listed in the Tables below.

The following are examples of further adducts which may be made in a similar way to the method of Example 2 or 3.

$(C_2H_5)_3Ga$ . thf; $(C_2H_5)_3In$ . thf; $(n\text{-}C_3H_7)_3Ga$ . thf;
$(n\text{-}C_3H_7)_3In$ . thf; $(n\text{-}C_4H_9)_3Ga$ . thf; $(n\text{-}C_4H_9)_3In$ . thf;
$(n\text{-}C_5H_{11})_3Ga$ . thf; $(n\text{-}C_5H_{11})_3In$ . thf; $(n\text{-}C_6H_{13})_3Ga$ . thf;
$(n\text{-}C_6H_{13})_3In$ . thf; $(n\text{-}C_7H_{15})_3Ga$ . thf; $(n\text{-}C_7H_{15})_3In$ . thf;
(iso-butyl)$_3$Ga . thf; (iso-pentyl)$_3$In . thf.

The following examples are of conversions of the precursor adducts formed in Examples 2 and 3 into final adducts suitable for conversion into compound semiconductors.

Example 4

Trimethylphosphine (5 g, 66 mmole) was added to the adduct $(CH_3)_3Ga$ . thf, prepared electrolytically, using a gallium anode, from dimethylmagnesium (0.9 g, 17 mmole), tetraethylammonium perchlorate (1 g, 4 mmole) in thf (100 ml) at 70°C (as in Example 2). The mixture was stirred for 30 minutes at room temperature and the trimethylphosphine was then removed in vacuo to leave a colourless crystalline solid which was purified by sublimation at room temperature onto a cold finger at a temperature of −76°C in vacuo.

The product was then investigated using:

(i) mass spectra measured on a VG Micromass 12 (Trade Mark) mass spectrometer;

(ii) $^1H$ nuclear magnetic resonance spectra recorded on a PE R12B (Trade Mark) instrument at 60 MHz;

(iii) infrared spectra recorded on a PE 577 (Trade Mark) instrument using thin films or nujol mulls between caesium iodide plates.

The results obtained are as listed in the Tables below.

Example 5

A similar procedure to that used in Example 4 was followed but using the adduct $(CH_3)_3Ga$ . thf and $P(C_2H_5)_3$ (42 mmole) as starting materials. The product was characterised as in Example 4 and also by microanalysis and the results obtained are as listed in the Tables below.

Example 6

A similar procedure to that used in Example 4 was followed but using the adduct $(CH_3)_3Ga$ . thf and $N(C_2H_5)_3$ (200 mmole) as starting materials. The product was characterised as in Example 4 and the results obtained are as listed in the Tables below.

Example 7

Triethylphosphine (42 mmole) was added to the adduct $(CH_3)_3In$ . thf (prepared electrolytically using an indium anode from dimethylmagnesium (10 mmole), $(C_2H_5)_4\ N^+\ ClO_4^-$ (4 mmole) and thf (100 ml) as in Example 2. The mixture was then stirred and subsequently sublimed as in Example 4.

The product obtained was characterised as in Example 4 and the results obtained are listed in the Tables below.

Example 8

The procedure used in Example 7 was followed but $N(C_2H_5)_3$ was used as a starting material in place of triethylphosphine.

The product obtained was characterised as in Example 4 and the results obtained are as listed in the Tables below.

TABLE 1

Mass spectra for $M^1(CH_3)_3$ (adduct) compounds

(Me=methyl, Et=ethyl, thf=tetrahydrofuran)

| Example No. | $M^1$ | Adduct | m/e (assignment) |
|---|---|---|---|
| 2 | Ga | thf | 71$[C_4H_7O]^+$, 72$[C_4H_8O]^+$, 69/71$[Ga]^+$, 84/86$[Ga\ Me]^+$, 99/101$[Ga\ Me_2]^+$. |
| 4 | Ga | $PMe_3$ | 69/71$[Ga]^+$, 76$[C_3H_9P]^+$, 77$[C_2H_6PO]^+$, 84/86$[Ga\ Me]^+$, 92$[C_3H_9PO]^+$ 99/101$[Ga\ Me_2]^+$. |
| 5 | Ga | $PEt_3$ | 61$[C_2H_6P]^+$, 62$[C_2H_7P]^+$, 69/71$[Ga]^+$, 73$[C_3H_8P]^+$, 84/86$[Ga\ Me]^+$, 90$[C_4H_{11}P]^+$, 99/101$[Ga\ Me_2]^+$, 103$[C_6H_{12}P]^+$. |
| 6 | Ga | $NEt_3$ | 69/71$[Ga]^+$, 84/86$[Ga\ Me]^+$, 86$[C_5H_{12}N]^+$, 99/101$[Ga\ Me_2]^+$, 101$[C_6H_{15}N]^+$ |
| 3 | In | thf | 71$[C_4H_7O]^+$, 72$[C_4H_8O]^+$, 115$[In]^+$, 130$[In\ Me]^+$, 145$[In\ Me_2]^+$. |
| 7 | In | $PEt_3$ | 61$[C_2H_6P]^+$, 76$[C_3H_9P]^+$, 90$[C_4H_{11}P]^+$, 103$[C_5H_{12}P]^+$, 105$[C_4H_{10}PO]^+$, 106$[C_4H_{11}PO]^+$, 115$[In]^+$, 118$[C_6H_{15}P]^+$, 130$[In\ Me]^+$, 145$[In\ Me_2]^+$. |
| 8 | In | $NEt_3$ | 86$[C_5H_{12}N]^+$, 115$[In]^+$, 130$[In\ Me]^+$, 145$[In\ Me_2]^+$, 261$[In\ Me_3 . NEt_3]^+$. |

TABLE 2
$^1H$ NMR Data for $M^1(CH_3)_3$ (adduct) compounds

| Example No. | $M^1$ | Adduct | τ (assignment) |
|---|---|---|---|
| 2 | Ga | thf⁺ | 6.4 (t, 7H, $C\underline{H_2}CH_2CH_2C\underline{H_2}O)^+$,<br>8.4 (m, 7H, $CH_2C\underline{H_2}C\underline{H_2}CH_2O$<br>10.2 (s, 9H, $Ga(C\underline{H_3})_3$. |
| 4 | Ga | $PMe_3$ | 9.2 (d, 9H, $P(CH_3)_3$), 10.0 (S, 9H, $Ga(C\underline{H_3})$). |
| 5 | Ga | $PEt_3$ | 8.9 (m, 15H, $P(C\underline{H_2}CH_3)_3$),<br>10.0 (s, 9H, $Ga(C\underline{H_3})_3$. |
| 6 | Ga | $NEt_3$ | 7.5 (qu, 6H, $N(C\underline{H_2}CH_3)_3$),<br>9.0 (t, 9H, $N(CH_2C\underline{H_3})_3$),<br>10.1 (s, 9H, $Ga(C\underline{H_3})$. |
| 3 | In | thf⁺ | 6.5 (t, 5H, $C\underline{H_2}CH_2CH_2C\underline{H_2}O$),<br>8.5 (m, 5H, $CH_2C\underline{H_2}C\underline{H_2}CH_2O$),<br>10.0 (s, 9H, $In(C\underline{H_3})_3$). |
| 7 | In | $PEt_3$ | 8.8 (m, 18H, $P(C\underline{H_2}C\underline{H_3})_3$),<br>10.0 (s, 9H, $In(C\underline{H_3})_3$). |
| 8 | In | $NEt_3$ | 7.5 (q, 6H, $N(C\underline{H_2}CH_3)_3$),<br>9.0 (t, 9H, $N(CH_2C\underline{H_3})_3$),<br>10.0 (s, 9H, $In(C\underline{H_3})_3$). |

+contains excess ligand; thf=tetrahydrofuran; s=singlet, d=doublet, t=triplet, q=quartet, m=multiplet.

TABLE 3
Microanalytical data for $M^1(CH_3)_3$ (adduct) compounds

| Example No. | $M^1$ | Adduct | Microanalysis Atomic ratios found (calculated figures in brackets) C | H | P |
|---|---|---|---|---|---|
| 5 | Ga | $PEt_3$ | 46.37 (46.4) | 10.06 (10.3) | 11.8 (13.3) |
| | | | Ga<br>29.93 (29.9) | | |

TABLE 4
Infrared absorption spectra for $Ga(CH_3)_3$ (adduct) compounds in the region 2000—200 $cm^{-1}$

Example No. 6: Adduct=$NEt_3$
1450(VS) 1390(VS) 1385(Sh,VS) 1332(M) 1322(M) 1300(S) 1190(VS) 1174(VS) 1160(VS) 1100(Sh,S) 1090(VS) 1050(VS) 1030(Sh,M) 1010(M) 900(M) 830(M) 805(M) 790(M) 725(VS) 650(M) 560(S) 530(VS) 510(S) 422(W) 335(VW).

Example No. 5: Adduct=$PEt_3$
1460(S) 1418(S) 1318(S) 1255(W) 1185(VS) 1045(S) 1010(W) 987(W) 925(VW) 895(VW) 867(VW) 840(W) 770(VS) 750(VS) 720(VS) 620(W) 570(W) 537(VS) 508(S) 510(W).

Example No. 4: Adduct=$PMe_3$
1420(S) 1310(S) 1300(S) 1290(S) 1180(VS) 1150(VS) 1045(M) 960(Sh,S) 942(VS) 870(W) 857(M) 840(MW) 730(VS) 570(M) 532(VS) 508(S) 500(W) 355(W).

The figures given in Table 4 are the frequencies of absorptions measured.

The strengths of the absorptions are denoted by VS=very strong, S=strong, M=medium, W=weak, VW=very weak, Sh=shoulder as appropriate.

The final adducts, i.e. the products of Examples 4 to 8 may be converted into semiconductor compounds by known methods. For example, the method may be as described by H. Renz and J. Weidlein in Electronics Letters, Vol. 16, 13 March 1980, No. 6, page 228. The relevant details of that method as used for decomposition of the adduct $(CH_3)_3In \cdot P(CH_3)_3$ to form InP are as follows:

The InP was grown in a conventional (organometallic) VPE apparatus including a vertical hot-wall quartz reactor and a $PCl_3$ bubbler for in situ etching of the InP substrates. An important feature of the reactor was the pyrolysis zone upstream of the substrate region. The typical pyrolysis temperature of the $(CH_3)_3In\text{-}P(CH_3)_3$ adduct was $T \sim 700°C$. The adduct was transported by means of Ar carrier gas (flow rate $\sim$20 $cm^3$/min) from a bubbler which was kept at $50 \pm 0.1°C$. At the entrance of the reactor (before the pyrolysis zone) the Ar/adduct flow was diluted with hydrogen (flow rate $\sim$1500 $cm^3$/min).

The epitaxial layers were grown on 1—2° off (100) oriented undoped and Sn-doped InP substrate crystals. The substrates were prepared by standard bromine methanol etching techniques. Substrate temperatures were varied between 500°C and 600°C. The growth rate was measured to about 0.8 µm/h at 500°C.

Alternatively, the products of Examples 4 to 8 may be reacted with a hydride of the appropriate Group V element as in the method described by R. H. Moss and J. S. Evans in J. Crystal Growth, Vol. 55 (1981), page 129.

## Claims

1. A method of preparing an adduct suitable for conversion into a compound semiconductor, the adduct being of the formula $M^1(R^1)_x \cdot [Q(R^2)_y]_z$, where $M^1$ is an element selected from indium, gallium, aluminium and cadmium; Q is an element selected from nitrogen, phosphorus, arsenic and antimony when $M^1$ is indium, gallium or aluminium and from oxygen, sulphur, selenium and tellurium where $M^1$ is cadmium, $(R^1)_x$ and $(R^2)_y$ each independently represent the same or different alkyl or aryl radicals and x represents an integer equal to the valency of $M^1$, y represents an integer equal to the valency of Q and z represents an integer equal to 1 or 2, which method comprises reacting a precursor adduct of the form $M^1(R^1)_x \cdot L$ with a compound of the formula $Q(R^2)_y$, wherein L is a solvent which is an aliphatic ether having from 3 to 12 carbon atoms.

2. A method as claimed in claim 1 wherein in the reaction of the precursor adduct $M^1(R^1)_x \cdot L$ with the compound $Q(R^2)_y$, the compound $Q(R^2)_y$ is in excess.

3. A method as claimed in claim 1 or claim 2 and wherein $R^1$ and $R^2$ are alkyl groups having from 1 to 7 carbon atoms.

4. A method as claimed in any one of the preceding claims wherein $R^1$ is the same as $R^2$.

5. A method as claimed in any one of the preceding claims and wherein the radical L is provided by a cycloaliphatic mono- or poly-ether having from 3 to 8 carbon atoms inclusive.

6. A method as claimed in claim 5 and wherein the radical L is tetrahydrofuran or dioxan.

7. An adduct of formula $M^1(R^1)_x \cdot L$ wherein $M^1$ is gallium or indium, each $R^1$ is an alkyl group, L is tetrahydrofuran and x is 3.

8. An adduct as claimed in claim 7 wherein the alkyl groups $R^1$ are identical.

9. An adduct as claimed in claim 7 or claim 8 wherein each of the alkyl groups $R^1$ has from 1 to 7 carbon atoms.

10. An adduct as claimed in claim 9 wherein $R^1$ is methyl.

11. An adduct as claimed in claim 9 wherein $R^1$ is ethyl.

## Revendications

1. Procédé pour préparer un procédé d'addition convenant pour être transformé en un semiconducteur composé, le produit d'addition ayant pour formule $M^1(R^1)_x \cdot [Q(R^2)_y]_z$, dans laquelle $M^1$ est un élément choisi parmi l'indium, le gallium, l'aluminium et le cadmium, Q est un élément choisi parmi l'azote, le phosphore, l'arsenic et l'antimoine quand $M^1$ représente l'indium, le gallium ou l'aluminium et Q est choisi parmi l'oxygène, le soufre, le sélénium et le tellure quand $M^1$ représente le cadmium; $(R^1)_x$ et $(R^2)_y$ représentent chacun, indépendamment, des radicaux alkyles ou aryles identiques ou différents, et x représente un nombre entier égal à la valence de $M^1$, y représente un nombre entier égal à la valence de Q et z représente un nombre entier égal à 1 ou 2, ce procédé comprenant la réaction d'un produit précurseur d'addition, de forme $M^1(R^1)_x \cdot L$, avec un composé de formule $Q(R^2)_y$, où L est un solvant qui est un éther aliphatique ayant de 3 à 12 atomes de carbone.

2. Procédé selon la revendication 1, dans lequel, dans la réaction du produit précurseur d'addition $M^1(R^1)_x \cdot L$ avec le composé $Q(R^2)_y$, le composé $Q(R^2)_y$ est en excès.

3. Procédé selon la revendication 1 ou la revendication 2, dans lequel $R^1$ et $R^2$ sont des groupes alkyles ayant d'1 à 7 atomes de carbone.

4. Procédé selon l'une quelconque des revendications précédentes, dans lequel $R^1$ est le même que $R^2$.

5. Procédé selon l'une quelconque des revendications précédentes, dans lequel le radical L est fourni par un mono- ou poly-éther cyclo aliphatique ayant de 3 à 8 atomes de carbone, inclusivement.

6. Procédé selon la revendication 5, dans lequel le radical L représente le tétrahydrofuranne ou le dioxanne.

7. Produit d'addition de formule $M^1(R^1)_x . L$, dans laquelle $M^1$ représente le gallium ou l'indium, chaque $R^1$ est un groupe alkyle, L représente le tétrahydrofuranne et x vaut 3.

8. Produit d'addition selon la revendication 7, dans lequel les groupes alkyles $R^1$ sont identiques.

9. Produit d'addition selon la revendication 7 ou la revendication 8, dans lequel chacun des groupes alkyles $R^1$ comporte 1 à 7 atomes de carbone.

10. Produit d'addition selon la revendication 9, dans lequel $R^1$ est un groupe méthyle.

11. Produit d'addition selon la revendication 9, dans lequel $R^1$ est un groupe éthyle.

**Patentansprüche**

1. Verfahren zur Herstellung eines für die Umwandlung in eine Halbleiterverbindung geeigneten Addukts der Formel

$$M^1(R^1)_x . [Q(R^2)_y]_z$$

wobei bedeuten:

$M^1$ Indium, Gallium, Aluminium oder Cadmium,

Q Stickstoff, Phosphor, Arsen oder Antimon, wenn $M^1$ Indium, Gallium oder Aluminium ist, oder Sauerstoff, Schwefel, Selen oder Tellur, wenn $M^1$ Cadmium ist,

$(R^1)_x$ und $(R^2)_y$ unabhängig gleiche oder verschiedene Alkyl- oder Arylreste und

x eine der Valenz von $M^1$ entsprechende ganze Zahl,

y eine der Valenz von Q entsprechende ganze Zahl und

z 1 oder 2, gekennzeichnet durch die Umsetzung einer Adduktvorstufe der Formel

$$M^1(R^1)_x . L$$

mit einer Verbindung der Formel

$$Q(R^2)_y,$$

wobei L ein Lösungsmittel, wie ein aliphatischer Ether mit von 3 bis 12 Kohlenstoffatomen, ist.

2. Verfahren nach Anspruch 1, dadurch gekennzeichnet, daß in der Reaktion der Adduktvorstufe $M^1(R^1)_x . L$ mit der Verbindung $Q(R^2)_y$ die Verbindung $Q(R^2)_y$ im Überschuß vorliegt.

3. Verfahren nach Anspruch 1 oder 2, dadurch gekennzeichnet, daß $R^1$ und $R^2$ Alkylgruppen mit 1 bis 7 Kohlenstoffatomen sind.

4. Verfahren nach einem der vorstehenden Ansprüche, dadurch gekennzeichnet, daß $R^1$ und $R^2$ gleich sind.

5. Verfahren nach einem der vorstehenden Ansprüche, dadurch gekennzeichnet, daß der Rest L ein cycloaliphatischer Mono- oder Polyether mit von 3 bis 8 Kohlenstoffatomen ist.

6. Verfahren nach Anspruch 5, dadurch gekennzeichnet, daß der Rest L Tetrahydrofuran oder Dioxan ist.

7. Addukt der Formel

$$M^1(R^1)_x . L$$

wobei bedeuten:

$M^1$ Indium oder Gallium,

$R^1$ Alkyl

L Tetrahydrofuran und

x 3.

8. Addukt nach Anspruch 7, dadurch gekennzeichnet, daß die Alkylgruppen $R^1$ gleich sind.

9. Addukt nach Anspruch 7 oder 8, dadurch gekennzeichnet, daß jede Alkylgruppe $R^1$ von 1 bis 7 Kohlenstoffatome hat.

10. Addukt nach Anspruch 9, dadurch gekennzeichnet, daß $R^1$ Methyl ist.

11. Addukt nach Anspruch 9, dadurch gekennzeichnet, daß $R^1$ Ethyl ist.